# EUROPEAN PATENT APPLICATION

(11) **EP 2 571 326 A2**
(43) Date of publication of application: **20.03.2013**
(21) Application number: 12184543.2
(22) Date of filing: 14.09.2012
(51) Int. Cl.: H04W 76/02

(54) **Apparatus and method for connecting to device in wireless terminal**

(30) Priority: 14.09.2011 KR 20110092512
(71) Applicant: Samsung Electronics Co., Ltd., Suwon-si, Gyeonggi-do, 443-742 (KR)
(72) Inventor: Kim, Chang-Soon, 443-742 Gyeonggi-do (KR)
(74) Representative: Jenkins, Richard Gavin

(57) **Abstract**

An apparatus and method for connecting to a device in a wireless terminal, and more particularly, an apparatus and a method for connecting to a device in a wireless terminal capable of quickly connecting to a desired device in a communication mode of the wireless terminal are provided. The apparatus includes a memory for storing connection information of devices stored in a preference list in a communication mode, and a controller for storing information related to a device connected in the communication mode in the preference list together with connection information of the device and for controlling a device selected from the preference list to be directly connected based on connection information of the selected device.

## Description

### BACKGROUND OF THE INVENTION

### 1. Field of the Invention:

The present invention relates to an apparatus and method for connecting to a device in a wireless terminal. More particularly, the present invention relates to an apparatus and method for connecting to a device in a wireless terminal capable of quickly connecting to a desired device in a communication mode of the wireless terminal.

### 2. Description of the Related Art:

Wi-Fi Peer to Peer (Wi-Fi P2P) or Wi-Fi Direct technology provides a direct connection between Wi-Fi terminals by using the existing Wi-Fi interface without an Access Point (AP), which is an interface device of the existing infrastructure network.

Most existing Wi-Fi devices only connect to the Internet through an AP with no consideration for a direct connection between Wi-Fi terminals. This lack of direct connections between Wi-Fi terminals is somewhat supplemented by Bluetooth, but given a transmission distance and a transmission speed, Wi-Fi P2P is expected to fill up the area that Bluetooth cannot cover up.

Although Wi-Fi technology supports an Ad-hoc mode supporting a direct connection, the Ad-hoc mode has not been widely used due to various disadvantages, such as weakness on security, power consumption, and throughput limited to 11 Mbps.

A Wi-Fi direct scheme compensates the weakness on security by supporting a complementary mode of Wi-Fi Protected Access 2 (WPA2) and supports the relatively simple connectivity between Wi-Fi terminals by using a Wi-Fi Simple Configuration (WSC). In addition, the Wi-Fi direct scheme significantly improves a throughput compared with Ad-hoc by supporting Institute of Electrical and Electronics Engineers (IEEE) 802.11n and additionally includes an enhanced power consumption algorithm.

The Wi-Fi direct scheme is a standard based on IEEE 802.11, Legacy Wi-Fi. Wi-Fi direct is compatible with existing Wi-Fi terminals and may be easily upgraded without any hardware change.

A P2P group includes Wi-Fi terminals connected to each other using Wi-Fi P2P. Assuming 1:1 connection, one device operates as a Group Owner (GO), and the other operates as a Group Client (GC). The GO terminal functions as a Wireless Local Area Network (WLAN) AP, and the GC terminal functions as a WLAN station. The roles of Wi-Fi P2P terminals are determined by a P2P-based protocol, Group Owner Negotiation, in a Wi-Fi P2P connection process.

A P2P group using the Wi-Fi P2P technology may be generated by a 1:1 or 1:N connection in which the number of acceptable GC terminals is determined according to the performance of a GO terminal.

A Wi-Fi P2P connection process includes searching for devices through a Device Discovery process and performing a Provision Discovery process with a connection-desired device from among found devices.

The Provision Discovery process includes informing the connection-desired device of how to connect. A WSC connection method includes a Push Button Configuration (PBC) method performed by a button input and a Personal Identification Number (PIN) method performed by a PIN number input. Accordingly, a requesting device transmits a message associated with a desired connection method to the connection-desired device. Upon receiving the message, the connection-desired device (requested device) informs a user thereof of the message through a pop-up window. The pop-up window includes information such as a device name of the requesting device which has requested the Provision Discovery process, and the user of the requested device determines acceptance/non-acceptance of connection and enabling/disabling of the WSC. After the Provision Discovery process, the requesting device and the requested device determine roles thereof through a GO Negotiation process. A device determined as a GO operates as an AP, and a device determined as a GC operates as a Wi-Fi station.

After a role of a device (i.e., GO or GC), is determined, the two devices exchange authentication information (an authentication type, an encryption type, a network key, and Service Set Identifier (SSID)) through a Provisioning process and then completes a P2P connection.

However, the above-described complex connection processes should be performed every time to connect to a corresponding device through Wi-Fi P2P. In particular, even for a device frequently used at a fixed place, the above-described complex connection processes is performed every time to connect to this device.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for connecting to a device in a wireless terminal capable of quickly connecting to a desired device in a communication mode of the wireless terminal.

Another aspect of the present invention is to provide an apparatus and method for connecting to a device in a wireless terminal capable of easily searching for a device and quickly connecting to the searched device in a Wi-Fi P2P mode of the wireless terminal.

In accordance with an aspect of the present invention, an apparatus for connecting to a device in a wireless terminal is provided. The apparatus includes a memory for storing connection information of devices stored in a preference list in a communication mode, and a controller for storing information related to a device connected in the communication mode in the preference list together with connection information of the device and for controlling a device selected from the preference list to be directly connected based on connection information of the selected device.

In accordance with another aspect of the present invention, a method of connecting to a device in a wireless terminal is provided. The method includes when a preference list for a device connected in a communication mode is selected, storing the information related to the connected device in the preference list, and when a device is selected from the preference list in the communication mode, directly connecting to the selected device based on connection information of the selected device.

In accordance with another aspect of the present invention, a wireless terminal is provided. The wireless terminal includes a communication unit for directly connecting with another wireless terminal that is not an access point, a memory for storing a preference list, the preference list including connection information of other wireless terminals to which the wireless terminal has previously connected, and a controller for storing connection information of a device added to the preference list in the memory, and for controlling the communication unit to directly connect with the device based on the stored connection information when a user of the wireless terminal requests communication with the device. Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is a block diagram of a wireless terminal according to an exemplary embodiment of the present invention;
FIG. 2 is a flowchart illustrating a process of storing a connected device in a Favorites list in a Wi-Fi Peer to Peer (P2P) mode of a wireless terminal according to an exemplary embodiment of the present invention;
FIG. 3 is a flowchart illustrating a process of connecting to a device stored in a Favorites list in a Wi-Fi P2P mode of a wireless terminal according to an exemplary embodiment of the present invention;
FIGs. 4A to 4C are illustrative diagrams for describing a process of storing a connected device in a Favorites list in a Wi-Fi P2P mode of a wireless terminal according to an exemplary embodiment of the present invention; and
FIGs. 5A to 5D are illustrative diagrams for describing a process of connecting to a device stored in a Favorites list in a Wi-Fi P2P mode of a wireless terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Although a Wi-Fi Peer to Peer (P2P) communication mode is illustrated as a communication mode for a device connection in a wireless terminal, exemplary embodiments of the present invention may be applied to all communication modules for performing a data communication function through a connection by a device search besides the Wi-Fi P2P communication mode.

In addition, a preference list in which a device connected in the communication mode is stored together with its connection information is described herein as a Favorites function or a Favorites list. However, it would be understood that the preference list could be referred to by different terminology.

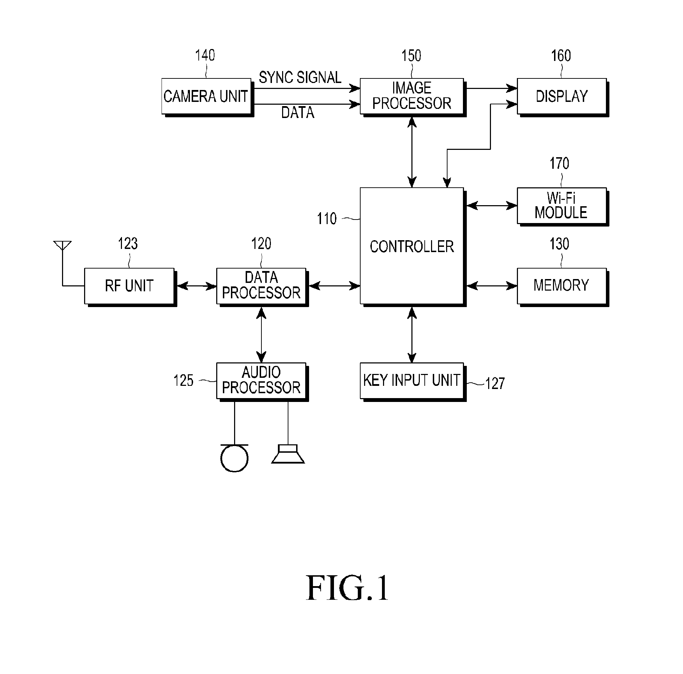

FIG. 1 is a block diagram of a wireless terminal according to an exemplary embodiment of the present invention.

Referring to FIG. 1, a Radio Frequency (RF) unit 123 performs a wireless communication function of the wireless terminal. The RF unit 123 includes an RF transmitter for up-converting a frequency of a transmission signal and amplifying the up-converted transmission signal and an RF receiver for low-noise amplifying a received signal and down-converting a frequency of the amplified received signal.

A data processor 120 includes a transmitter for coding and modulating the transmission signal and a receiver for demodulating and decoding the received signal. The data processor 120 may include a modem and a codec. The codec includes a data codec for processing packet data and the like, and an audio codec for processing an audio signal such as voice. An audio processor 125 plays a received audio signal output from the audio codec in the data processor 120 and transfers a transmission audio signal picked up by a microphone to the audio codec in the data processor 120.

A key input unit 127 includes alphanumeric keys for inputting alphanumeric information and function keys for setting various functions.

A memory 130 may include a program memory and a data memory. The program memory may store programs for controlling a general operation of the wireless terminal and programs for controlling a direct connection to a device stored in a Favorites list according to an exemplary embodiment of the present invention. The data memory may temporarily store data generated while the programs are executed.

The memory 130 may also store devices on a device category basis in the Favorites list and store connection information of the stored devices, according to an embodiment of the present invention. The connection information includes a connection method, role information, and authentication information extracted in a connection process for a corresponding device to be connected to the wireless terminal.

A controller 110 controls the overall operation of the wireless terminal. According to an exemplary embodiment of the present invention, when "Add to Favorite" is selected for a device connected in a Wi-Fi P2P mode, the controller 110 controls the connected device to be stored in the Favorites list together with connection information of the connected device. The controller 110 controls the Favorites list to be classified on a device category basis and the connected device to be stored in a category selected by a user.

The controller 110 controls extraction of connection information of a device selected from the Favorites list in the Wi-Fi P2P mode and direct connection to the selected device based on the extracted connection information. If the Favorites list is selected in the Wi-Fi P2P mode, the controller 110 controls device categories for classifying the Favorites list to be displayed, connection information of a device selected from among devices stored in a selected category to be extracted, and the selected device to be directly connected based on the extracted connection information.

A Wi-Fi module 170 provides a near-distance wireless communication function according to the IEEE 802.11 standard. The user of the wireless terminal may form (or create) a Wi-Fi direct group to use a data exchange function by using the Wi-Fi module 170.

A camera unit 140 includes a camera sensor for capturing image data and converting the captured optical signal into an electrical signal, and a signal processor for converting an analog image signal captured by the camera sensor into digital data. The camera sensor is assumed herein to be a Charge-Coupled Device (CCD) or Complementary Metal Oxide Semiconductor (CMOS) sensor, and the signal processor may be realized by a Digital Signal Processor (DSP). The camera sensor and the signal processor may be realized in an integrated manner or in a separated manner.

An image processor 150 performs Image Signal Processing (ISP) for displaying image signals output from the camera unit 140 on a display unit 160. The ISP performs functions such as gamma correction, interpolation, spatial variation, image effects, image scaling, Automatic White Balance (AWB), Automatic Exposure (AE), and Automatic Focusing (AF).

The image processor 150 processes the image signals output from the camera unit 140 on a frame basis, and outputs the frame-based image data according to the characteristics and size of the display unit 160. The image processor 150, which includes a video codec, compresses frame image data displayed on the display unit 160 by preset coding, and restores (or decompresses) the compressed frame image data into its original frame image data. The video codec may include a JPEG codec, MPEG4 codec, Wavelet codec, etc. Assuming that the image processor 150 includes an On-Screen Display (OSD) function, the controller 110 may control the image processor 150 to output OSD data according to the size of a screen on which the data is displayed.

The display unit 160 displays an image output from the image processor 150 and user data output from the controller 110 on a screen. The display unit 160 may include a Liquid Crystal Display (LCD), and in this case, the display unit 160 includes an LCD controller, a memory for storing image data, and an LCD panel. The LCD may serve as an input unit with a touch screen, and in this case, the display unit 160 may display the alphanumeric keys of the key input unit 127.

The display unit 160 may display devices stored in the Favorites list in the Wi-Fi P2P mode according to an exemplary embodiment of the present invention. The display unit 160 may also display devices stored in a category selected from categories classified from the Favorites list in the Wi-Fi P2P mode.

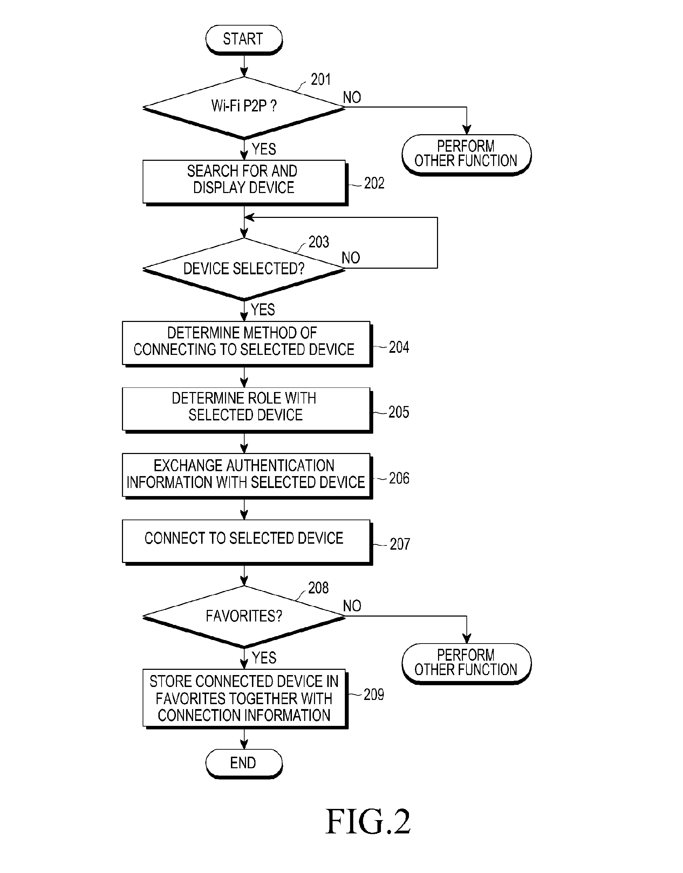

A device connection process in the wireless terminal is described below with reference to FIGs. 2 to 5D.

FIG. 2 is a flowchart illustrating a process of storing a connected device in a Favorites list in a Wi-Fi P2P mode of a wireless terminal according to an exemplary embodiment of the present invention. Hereinafter, this exemplary embodiment is described with reference to FIG. 1.

Referring to FIG. 2, if the Wi-Fi P2P mode is selected in the wireless terminal, the controller 110 switches to the Wi-Fi P2P mode in step 201. In the Wi-Fi P2P mode, the controller 110 searches for devices through a Device Discovery process and displays found devices in step 202.

If a connection-desired device is selected in step 203 from among the found devices displayed in step 202, the controller 110 determines a method of connecting to the selected device through a Provision Discovery process in step 204.

After determining the method of connecting to the selected device in step 204, the controller 110 determines roles (Group Owner (GO) and Group Client (GC)) between the wireless terminal and the selected device through a GO Negotiation process in step 205.

If their roles are determined in step 205, the controller 110 exchanges authentication information (an authentication type, an encryption type, a network key, and Service Set Identifier (SSID)) with the selected device through a Provisioning process in step 206 and completes a Wi-Fi P2P connection to the selected device based on the exchanged authentication information in step 207. If "Add to Favorite" is selected in step 208 during the Wi-Fi P2P connection to the selected device in step 207, the controller 110 stores the connected device in the Favorites list together with its connection information in step 209. In step 209, the controller 110 extracts the connection method, the role information, and the authentication information obtained in steps 204 to 206, sets the connection information with the extracted connection method, role information, and authentication information, and stores the set connection information together with the connected device. Storing the connected device may denote storing information identifying the connected device to allow the controller 110 to obtain the associated connection information at a later point.

Alternatively, in step 209, the controller 110 may control device categories classified in the Favorites list to be displayed and the connected device to be stored in a category selected by the user together with the connection information.

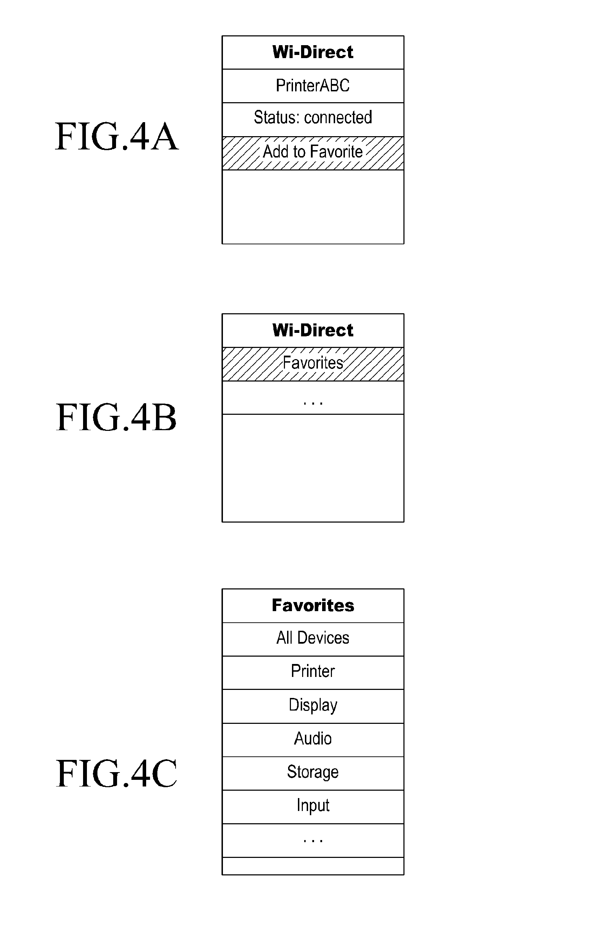

FIGs. 4A to 4C are illustrative diagrams for describing a process of storing a connected device in the Favorites list in the Wi-Fi P2P mode of the wireless terminal that is performed in FIG. 2 according to an exemplary embodiment of the present invention.

Referring to FIGs. 4A-4C, if "Add to Favorite" is selected while a selected device is in a status of Wi-Fi Direct connected as shown in FIG. 4A, a "Favorites" menu is displayed as shown in FIG. 4B. If the "Favorites" menu is selected in FIG. 4B, device categories classified in the Favorites list are displayed as shown in FIG. 4C. Accordingly, the user may classify and store devices to be added to the Favorites list on a category basis. The device categories may be modified, added, or deleted by the user.

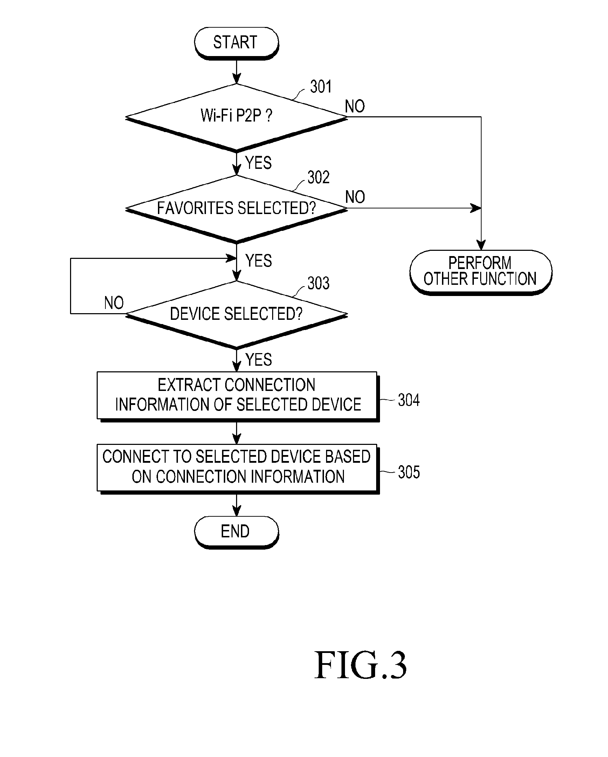

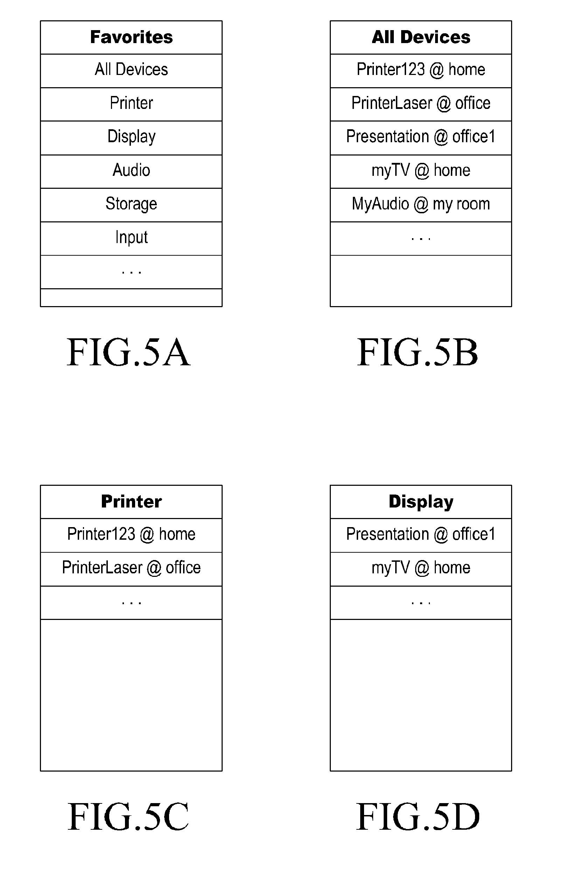

An operation of connecting to a device stored in the Favorites list by the operation illustrated in FIG. 2 and FIGs. 4A to 4C is described with reference to FIG. 3 and FIGs. 5A to 5D.

FIG. 3 is a flowchart illustrating a process of connecting to a device stored in the Favorites list in the Wi-Fi P2P mode of the wireless terminal according to an exemplary embodiment of the present invention. This exemplary embodiment is described with reference to the wireless terminal shown in FIG. 1.

Referring to FIG. 3, if the Wi-Fi P2P mode is selected in the wireless terminal, the controller 110 switches to the Wi-Fi P2P mode in step 301.

If the Favorites list is selected in the Wi-Fi P2P mode, the controller 110 displays devices stored in the Favorites list in step 302. Alternatively, the controller 110 may display device categories classified in the Favorites list and display devices stored in a category selected from among the displayed device categories.

When a device is selected from among the displayed devices in step 303, the controller 110 extracts connection information of the selected device from the memory 130 in step 304.

In step 305, the controller 110 directly connects to the selected device based on the connection information extracted in step 304 by omitting a connection method determining process, a role determining process, and an authentication information exchanging process.

FIGs. 5A to 5D are illustrative diagrams for describing the process of connecting to a device stored in the Favorites list in the Wi-Fi P2P mode of the wireless terminal that is performed in FIG. 3 according to an exemplary embodiment of the present invention.

Referring to FIGs. 5A-5D, FIG. 5A shows device categories classified in the Favorites list when the Favorites list is selected in the Wi-Fi P2P mode. FIG. 5B shows devices stored in an "All Device" category when the "All Device" category is selected from among the device categories shown in FIG. 5A. FIG. 5C shows devices stored in a "Printer" category when the "Printer" category is selected from among the device categories shown in FIG. 5A. FIG. 5D shows devices stored in a "Display" category when the "Display" category is selected from among the device categories shown in FIG. 5A.

As is apparent from the foregoing description, the proposed apparatus and method for connecting to a device in a wireless terminal according to exemplary embodiments of the present invention allows a protected desired device to be quickly and easily searched for and connected.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for connecting to a device in a wireless terminal, the apparatus comprising:
a memory for storing connection information of devices stored in a preference list in a communication mode; and
a controller for storing information related to a device connected in the communication mode in the preference list together with connection information of the device and for controlling a device selected from the preference list to be directly connected based on connection information of the selected device.

2. The apparatus of claim 1, wherein the communication mode is one of a Wi-Fi Peer to Peer mode or a Wi-Fi Direct mode.

3. The apparatus of claim 1, wherein, if the preference list of the connected device is selected, the controller controls the memory to store a method of connecting to the device, role information of the device, and authentication information exchanged with the device as connection information of the device to be stored in the preference list.

4. The apparatus of claim 3, wherein the controller extracts the connecting method, the role information, and the authentication information included in the connection information through connection processes previously performed before connecting to the device.

5. The apparatus of claim 1, wherein the controller classifies the preference list on a device category basis and controls the memory to store the connected device in a selected category together with the connection information.

6. The apparatus of claim 1, wherein, when the device is selected from the preference list in the communication mode, the controller extracts connection information of the selected device and controls a direct connection to the selected device based on the extracted connection information.

7. The apparatus of claim 1, wherein, when the device is selected from the preference list in the communication mode, the controller displays device categories classified in the preference list, extracts connection information of the selected device, and controls a direct connection to the selected device based on the extracted connection information.

8. A method of connecting to a device in a wireless terminal, the method comprising:
when a preference list for a device connected in a communication mode is selected, storing information related to the connected device in the preference list; and
when a device is selected from the preference list in the communication mode, directly connecting to the selected device based on connection information of the selected device.

9. The method of claim 8, wherein the communication mode is one of a Wi-Fi Peer to Peer mode or a Wi-Fi Direct mode.

10. The method of claim 8, wherein the storing of the information comprises:
displaying devices searched in the communication mode;
determining a method of connecting to a device selected from among the searched devices;
when the connecting method is determined, determining a role of the selected device;
when the role is determined, exchanging authentication information with the selected device;
when the authentication information is exchanged, connecting to the selected device based on the authentication information;
when 'Add to Preference List' for the connected device is selected, setting the connecting method, role information, and the authentication information as connection information of the connected device; and
storing the connected device in the preference list together with the connection information.

11. The method of claim 10, further comprising:
when 'Add to Preference List' for the connected device is selected, displaying device categories classified in the preference list; and
when a category is selected from among the device categories, storing the connected device in the selected category together with the connection information.

12. The method of claim 8, wherein the connecting comprises:
when the preference list is selected in the communication mode, displaying devices stored in the preference list;
when a device is selected from among the devices stored in the preference list, extracting connection information of the selected device; and
directly connecting to the selected device based on the extracted connection information.

13. The method of claim 12, wherein the displaying of the devices comprises:
when the preference list is selected in the communication mode, displaying device categories classified in the preference list; and
when a category is selected from among the device categories, displaying devices stored in the selected category.
